# EUROPÄISCHE PATENTSCHRIFT

(11) **EP 0 473 868 B1**
(45) Veröffentlichungstag und Bekanntmachung des Hinweises auf die Patenterteilung: **23.11.1994**
(21) Anmeldenummer: 91102386.9
(22) Anmeldetag: 20.02.1991
(51) Int. Cl.: G01F 1/68

(54) **Flusswächter**
Flow monitor
Dispositif de surveillance d'un courant

(30) Priorität: 20.02.1990 DE 4005227
(43) Veröffentlichungstag der Anmeldung: 11.03.1992
(73) Patentinhaber: Hörsch, Friedrich, D-89081 Ulm (DE)
(72) Erfinder: Hörsch, Friedrich, D-89081 Ulm (DE)

(56) Entgegenhaltungen:
- DE-A- 3 730 511
- DE-C- 3 637 917
- PATENT ABSTRACTS OF JAPAN vol. 8, no. 169 (P-292)(1606), 4. August 1984 ; & JP-A-59 065 720

## Beschreibung

Die Erfindung betrifft einen Flußwächter für ein in einer Leitung fließendes Medium, mit einer im Leitungszug liegenden Leitungsverengung, mit einem Heizelement und mit einer Temperatursonde, wobei das Heizelement und die Temperatursonde sich an der Leitungsverengung mit einander zugewandten Wärmeübergangsflächen im wesentlichen quer zur Fließrichtung des Mediums gegenüber liegen.

Aus der DE-PS 36 37 917 ist ein Flußwächter dieser Art bekannt, der zur Überwachung eines diskontinuierlich in jeweils nur kleinen Mengen fließenden Mediums, z. B. Schmierstoff, bestimmt ist. Bei diesem bekannten Flußwächter greifen das Heizelement und die Temperatursonde durch die Leitungswand hindurch und stehen an ihrer Wärmeübertragungsfläche im unmittelbaren Kontakt mit dem in der Leitung befindlichen Medium. Das Heizelement erwärmt das Medium nennenswert nur im Bereich der Leitungsverengung und der sich darin gegenüberstehenden beiden Wärmeübertragungsflächen. Bei in der Leitungsverengung stillstehendem Medium nimmt daher die Wärmeübergangsfläche der Temperatursonde schnell die Temperatur der Wärmeübergangsfläche des Heizelements an. Die dabei zwischen beiden Wärmeübertragungsflächen vorhandene Mediummenge kann je nach Größe und Abstand der Wärmeübergangsfläche und je nach Querschnittsgröße der Leitungsverengung sehr klein gehalten werden. Daher genügt zur Anzeige durch die Temperatursonde schon ein Fluß des Mediums in so geringer Menge, daß das zuvor erwärmte Medium gegen zunächst noch kühles Medium zwischen den Wärmeübergangsflächen ausgetauscht wird und letzteres an der Temperatursonde einen vorübergehenden Temperaturfall so lange erzeugt, bis das anschließend wieder stillstehende Medium auf die Temperatur der Wärmeübergangsfläche des Heizelementes aufgeheizt worden ist. Diese entsprechend dem diskontinuierlichen Mediumfluß sich wiederholenden Temperaturfälle ergeben eine sichere Flußüberwachung selbst bei sehr geringen Flußmengen. - Die Überwachung eines kontinuierlichen Mediumflusses bereitet mit einem solchen Flußwächter jedoch Probleme, da im dann stationären Fließzustand deutliche Temperaturfälle, wie sie bei dem bekannten Flußwächter zur Anzeige dienen, nicht auftreten.

Der Erfindung liegt die Aufgabe zugrunde, einen Flußwächter der eingangs genannten Art so auszubilden, daß er zur Überwachung eines kontinuierlich in kleinen zeitlichen Mengen von der Größenordnung nur einiger Milliliter pro Stunde fließenden Mediums besonders geeignet ist.

Diese Aufgabe wird nach der Erfindung dadurch gelöst, daß das Heizelement und die Temperatursonde mit ihren außerhalb der Leitung liegenden Wärmeübergangsflächen im Wärmekontakt mit der Außenseite von Teilen der Leitungswand stehen, die zwischen sich die Leitungsverengung bilden und ausreichend dünnwandig sind, so daß die Wärmeleitung zwischen den Wärmeübergangsflächen und dem Medium quer durch die Leitungswand besser ist als die Wärmeleitung in der Leitungswand entlang dem Umfang der Leitungsverengung.

Bei dem erfindungsgemäßen Flußwächter wird nicht die Temperatur des Mediums, sondern die Temperatur der Außenseite der Leitungswand an der Wärmeübergangsfläche der Temperatursonde gemessen. Diese Temperatur bestimmt sich im stationären Fließzustand des Mediums vor allem einerseits aus der Wärmezufuhr vom Heizelement her infolge Wärmeleitung in der Leitungswand und Wärmestrahlung und andererseits aus der Wärmeabfuhr infolge Wärmekonvektion durch das in der Leitung fließende Medium: Die Wärme, die dem der Wärmeübergangsfläche der Temperatursonde anliegenden Leitungswandteil von dem Heizelement zugeführt wird, ist im stationären Zustand im wesentlichen gleich der Wärme, die dem Leitungswandteil infolge Kühlung durch das strömende Medium entzogen wird. Erhöht oder verringert sich die Strömungsgeschwindigkeit des Mediums, ändert sich die Kühlung und verringert bzw. erhöht sich entsprechend die Temperatur des Leitungswandteils an der Temperatursonde, und zwar um so empfindlicher, je größer jeweils die relative Strömungsänderung am Leitungswandteil ist, je kleiner also die Querschnittsgröße der Leitungsverengung im Vergleich zum vollen Leitungsquerschnitt vor oder hinter der Leitungsverengung ist. Die von der Temperatursonde erfaßte Temperatur des ihrer Wärmeübergangsfläche anliegenden Leitungswandteils ermöglicht somit eine sichere Anzeige des Fließzustandes des Mediums innerhalb der Leitung, und zwar bis hinunter zu Fließmengen von etwa 1 ml/h. Dabei ist von weiterem sehr wesentlichem Vorteil, daß die Leitung zum Anschließen des erfindungsgemäßen Flußwächters nicht geöffnet zu werden braucht. Das Heizelement und die Temperatursonde können von außen an die Leitungsverengung angesetzt werden, so daß jeder Eingriff in das Leitungsinnere unterbleibt. Der erfindungsgemäße Flußwächter ist somit besonders zum Einsatz im medizinischen bzw. medizinisch-technischen Bereich etwa für die Flußüberwachung von Infusionslösungen oder dergl. geeignet, weil er ohne Gefahr einer Kontamination des Leitungsinneren an die Leitung angeschlossen werden kann und die spätere Reinigung der Leitung nicht erschwert.

Eine bevorzugte Ausführungsform ist dadurch gekennzeichnet, daß das Heizelement eine Heizplatte besitzt, die mit der Plattenebene im wesentlichen quer zur Fließrichtung des Mediums ausgerichtet ist und mit einem Teil ihres Randes die Wärmeübergangsfläche bildet. Dabei kann es sich empfehlen, daß die Wärmeübergangsfläche des Heizelements die Leitungswand über einen Teil des Umfangs der Leitungsverengung umschließt, um dadurch eine möglichst starke Beeinflussung des der Heizplatte gegenüber liegenden Leitungswandteils an der Temperatursonde durch die Wärmestrahlung des Heizelements zu erreichen. Von besonderem Vorteil ist es, wenn die Anordnung so getroffen wird, daß die Leitung von einem Schlauch oder Rohr aus flexiblem Werkstoff und die Leitungsverengung durch Zusammendrücken der Schlauch- oder Rohrwand zwischen den Wärmeübergangsflächen der Heizplatte und der Temperatursonde gebildet ist. Insbesondere empfiehlt es sich, das Heizelement und die Temperatursonde an zwei Backen einer Klammer anzuordnen, die über die Leitung gegeneinander verspannt werden.

Im einzelnen ist eine sehr zweckmäßige Ausführungsform der Erfindung dadurch gekennzeichnet, daß mindestens ein Teil der Wärmeübergangsfläche des Heizelements von einer zur Fließrichtung des Mediums parallelen Nut gebildet ist, in der die Leitung liegt, und daß die der Nut gegenüber liegende Wärmeübergangsfläche der Temperatursonde quer zur Fließrichtung des Mediums schmaler als die Nutbreite zwischen den Nuträndern ist. Es empfiehlt sich, den Querschnitt der Nut konkav auszurunden, um zu erreichen, daß die Leitungswand überall an der Nutwandung anliegt.

Eine weiter bevorzugte Ausführungsform ist dadurch gekennzeichnet, daß die Leitung in Fließrichtung vor der Leitungsverengung eine zweite Leitungsverengung aufweist und eine zweite Temperatursonde vorgesehen ist, deren Wärmeübergangsfläche in wärmeleitender Verbindung mit der Leitungswand an der zweiten Leitungsverengung steht, und daß zur Überwachung des Mediumflusses die Differenz der Signale von beiden Temperatursonden gebildet wird. Hierdurch wird erreicht, daß aus der Umgebung herrührende oder durch andere Einflüsse bedingte Temperaturänderungen des Mediums und/oder der Leitung insgesamt nicht fälschlich Änderungen des Fließzustands des Mediums vortäuschen können. Um zu diesem Zweck in beiden Leitungsverengungen insbesondere gleich Strömungszustände des Mediums herzustellen, besitzen zweckmäßigerweise die beiden Leitungsverengungen im wesentlichen gleiche Querschnittsgröße. In diesem Zusammenhang kann es sich auch empfehlen, an der zweiten Leitungsverengung zwischen der Außenfläche der Leitungswand und der Wärmeübergangsfläche der Temperatursonde ein mit beiden im Wärmekontakt stehendes, gut wärmeleitendes Massenstück, vorzugsweise aus Metall, anzuordnen. Ein solches Massestück befindet sich auf der mittleren Umgebungstemperatur und folgt nicht kurzzeitig stattfindenden Änderungen der Umgebungstemperatur, die ohne Einfluß auf die an der ersten Verengung von der Temperatursonde erfaßte Temperatur sind. Um das Massestück im übrigen auch eng mit der Temperatur des Mediums vor der ersten Leitungsverengung zu korrelieren, empfiehlt es sich weiter, daß sich die zweite Leitungsverengung in Fließrichtung des Mediums über eine im Vergleich zur ersten Leitungsverengung größere Länge erstreckt und das Massestück über die Länge der zweiten Leitungsverengung hinweg mit der Leitungswand im Wärmekontakt steht. Soll die Temperatur des Massestücks über die Umgebungstemperatur angehoben und die Temperatur des zuströmenden Mediums entsprechend erhöht werden, kann das Massestück unabhängig vom Heizelement selbständig beheizt werden. Um auch eine Korrelation mit der Temperatur des Heizelements selbst zu erhalten, kann das Massestück über eine neben der Leitungswand verlaufende Wärmeleitungsbrücke mit dem Heizelement, vorzugsweise mit dessen Heizplatte, verbunden sein.

Im folgenden wird die Erfindung an einem in der Zeichnung im wesentlichen schematisch dargestellten Ausführungsbeispiel näher erläutert; es zeigen:

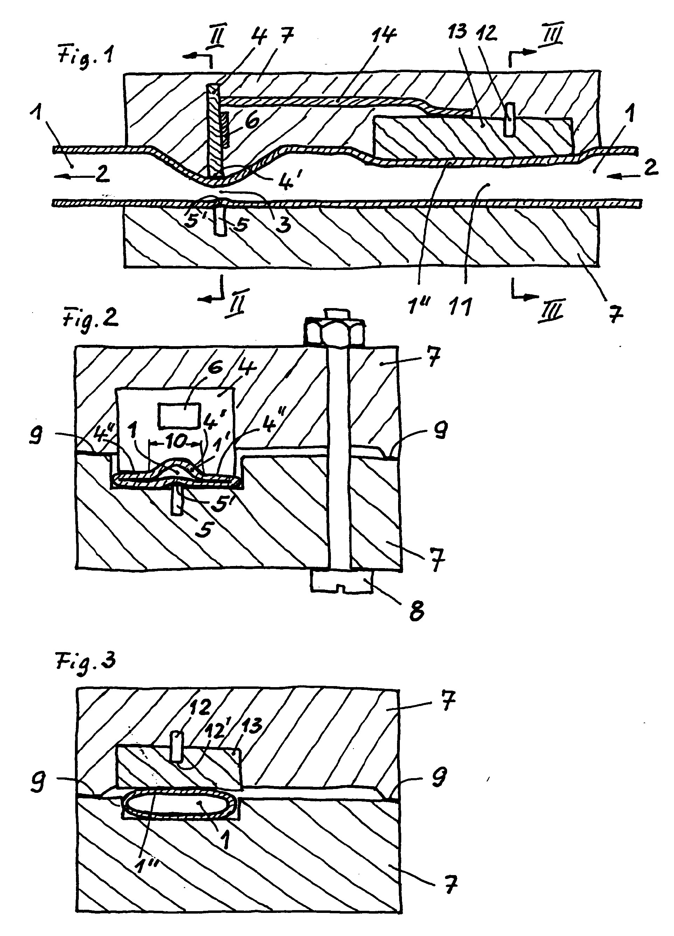

- Fig. 1: einen Längsschnitt durch einen erfindungsgemäßen Flußwächter,
- Fig. 2: den Querschnitt durch den Flußwächter der Fig. 1 längs der dort eingetragenen Linie II-II, und
- Fig. 3: den Querschnitt längs der Linie III-III in Fig. 1.

Der in der Zeichnung dargestellte Flußwächter dient zur Fließüberwachung eines in einer Leitung 1 kontinuierlich in Richtung des Pfeiles 2 fließenden Mediums. Die Leitung 1 besitzt eine im Leitungszug liegende erste Leitungsverengung 3, an der ein Heizelement 4 und eine Temperatursonde 5 vorgesehen sind. Das Heizelement 4 und die Temperatursonde 5 liegen sich mit einander zugewandten Wärmeübergangsflächen 4′, 5′ im wesentlichen quer zur Fließrichtung des Mediums gegenüber.

Das Heizelement 4 und die Temperatursonde 5 befinden sich insgesamt und insbesondere mit ihren Wärmeübergangsflächen 4′, 5′ außerhalb der Leitung 1. Ihre Wärmeübergangsflächen 4′, 5′ liegen wärmeleitend an der Außenseite von Teilen 1′ der Leitungswand an, die zwischen sich die Leitungsverengung 3 bilden. Im übrigen sind zumindest diese Teile 1′ der Leitungswand ausreichend dünnwandig, so daß die Wärmeleitung jeweils zwischen den Wärmeübergangsflächen 4′ oder 5′ und dem Medium quer durch die Leitungswand 1′ besser ist als die Wärmeleitung vom Heizelement 4 in der Leitungswand entlang dem Umfang der Leitungsverengung 3 zur Temperatursonde 5. Die von der Temperatursonde 5 erfaßte Temperatur des ihrer Wärmeübergangsfläche 5′ anliegenden Teils 1′ der Leitungswand ist im wesentlichen bestimmt durch die Wärmezufuhr vom Heizelement 4 her und durch die Wärmeabfuhr aufgrund der Kühlung durch das an der Leitungswand 1′ entlang strömende Medium, wobei selbstverständlich davon auszugehen ist, daß die Temperatur des Heizelements 4 erheblich größer als die der Umgebung und des der Leitungsverengung 3 zuströmenden Mediums ist. Die Temperatur des Heizelements kann beispielsweise 100 bis 150° betragen. Sie ist nach oben hin im wesentlichen nur durch den für die Leitungswand gewählten Werkstoff begrenzt, der unter der Erwärmung durch das Heizelement 4 nicht seine Stabilität verlieren darf. Im Ergebnis ist die von der Temperatursonde 5 angezeigte Temperatur durch das Ausmaß der vom Medium bewirkten Kühlung und damit vom Strömungszustand des Mediums bestimmt. Da in der Leitungsverengung 3 die Strömung des Mediums zur Strömung in den anderen, nicht verengten Leitungsquerschnitten im umgekehrten Verhältnis wie die Querschnittsgrößen der Leitungsverengung und des übrigen Leitungsquerschnitts stehen, kann auch bei geringen Fließmengen in der Leitungsverengung 3 eine so große Strömungsgeschwindigkeit erreicht werden, daß im Ergebnis sehr geringe Fließmengen noch sicher überwacht werden können. Die praktische Erprobung hat gezeigt, daß dies bei entsprechender Dimensionierung der Leitung 1 und der Leitungsverengung 3 noch bis zu Strömungsmengen von etwa 1 ml/h möglich ist.

Im einzelnen besitzt das Heizelement 4 eine Heizplatte 6, die mit der Plattenebene im wesentlichen quer zur Fließrichtung des Mediums ausgerichtet ist und mit einem Teil ihres Randes die Wärmeübergangsfläche 4′ bildet. Diese in Fließrichtung des Mediums nur geringe Abmessung des Heizelementes 4 ist möglich, weil es für die Funktionsweise des Flußwächters nicht auf eine Erwärmung des die Leitungsverengung 3 durchströmenden Mediums, sondern im wesentlichen auf die Erwärmung des der Wärmeübergangsfläche 5′ der Temperatursonde 5 anliegenden Leitungswandteiles 1′ ankommt. Die Wärmeübergangsfläche 4′ des Heizelementes 4 umschließt die Leitungswand 1′ über einen Teil des Umfangs der Leitungsverengung 3, wobei der Umschließungswinkel im Ausführungsbeispiel weniger als 180° beträgt, aber auch größer sein kann.

Die Leitung 1 ist von einem Schlauch oder einem Rohr aus flexiblem Werkstoff gebildet, der zur Ausbildung der Leitungsverengung 3 ein Zusammendrücken der Schlauch- oder Rohrwand zwischen den Wärmeübergangsflächen 4′, 5′ der Heizplatte 4 und der Temperatursonde 5 ermöglicht. Dieses Zusammendrücken der Schlauch- oder Rohrwand erfolgt im Ausführungsbeispiel einfach dadurch, daß das Heizelement 4 und die Temperatursonde 5 an zwei Backen 7 einer Klammer angeordnet sind, die über die Leitung 1 gegeneinander mittels Schrauben 8 verspannt werden können. Der Abstand zwischen beiden Backen 7 wird im zusammengespannten Zustand durch zwischen beiden Backen vorgesehene Anschläge 9 bestimmt, die ein zu weitgehendes Zusammendrücken der Leitung 1 verhindern und eine vorgegebene Querschnittsgröße der Leitungsverengung 3 gewährleisten.

Ein Teil der Wärmeübergangsfläche 4′ des Heizelementes 4 ist von einer zur Fließrichtung des Mediums parallelen Nut gebildet, in der die Leitung 1 liegt. Die der Nut gegenüberliegende Wärmeübergangsfläche 5′ der Temperatursonde 5 ist quer zur Fließrichtung des Mediums, schmaler als die mit 10 bezeichnete Nutbreite zwischen den Nuträndern. Die Beheizung des der Temperatursonde 5 anliegenden Leitungswandteils 1′ erfolgt daher primär von der Nutwandung her und weniger von den beidseits an die Nut anschließenden Flächen 4˝ der Heizplatte 6. Der Querschnitt der Nut ist konkav ausgerundet, so daß sich die Leitungswand der Nutwandung anschmiegen kann.

Die Leitung 1 besitzt in Fließrichtung vor der ersten Leitungsverengung 3 eine zweite Leitungsverengung 11. Eine zweite Temperatursonde 12 steht mit ihrer Wärmeübergangsfläche 12′ in wärmeleitender Verbindung mit der Leitungswand 1˝ an dieser zweiten Leitungsverengung 11. Beide Leitungsverengungen 3, 11 besitzen im wesentlichen gleiche Querschnittsgröße. Die zweite Temperatursonde 12 erfaßt somit die Temperatur der Leitungswand 1˝, die sich aufgrund der Umgebungstemperatur und der Temperatur des zuströmenden Mediums einstellt. Die erste Temperatursonde 5 erfaßt die davon abweichende, von dem Heizelement 4 beeinflußte Temperatur. Zur Überwachung des Mediumflusses wird die Differenz der Signale von beiden Temperatursonden 5, 12 gebildet, so daß Temperaturänderungen, die nicht durch Strömungsänderungen des Mediums in der ersten Leitungsverengung 3, sondern durch Temperaturänderungen in der Umgebung oder des zuströmenden Mediums bedingt sind, nicht zur Anzeige kommen und keine Strömungsänderung des Mediums vortäuschen können.

An der zweiten Leitungsverengung 11 zwischen der Außenfläche der Leitungswand 1˝ und der Wärmeübergangsfläche 12′ der Temperatursonde 12 ist ein mit beiden in wärmeleitender Berührung stehendes, selbst ebenfalls gut Wärme leitendes Massestück 13, vorzugsweise aus Metall, vorgesehen. Dieses Massestück 13 verhindert, daß kurzzeitige Änderungen der Umgebungstemperatur, die an der ersten Temperatursonde 5 keine Temperaturänderung ergeben, auch an der zweiten Temperatursonde 12 nicht erfaßt werden, weil das Massestück 13 infolge seiner thermischen Trägheit solchen kurzfristigen Temperaturänderungen nicht folgt. Die Temperatur des Massestücks 13 unterscheidet sich auch nicht nennenswert von der Temperatur des die zweite Leitungsverengung 11 durchströmenden Mediums. Um diese Temperaturkorrelation zwischen dem Massestück 13 und dem die zweite Leitungsverengung 11 durchströmenden Medium möglichst eng zu gestalten, erstreckt sich die zweite Leitungsverengung 11 in Fließrichtung des Mediums über eine im Vergleich zur ersten Leitungsverengung 3 erheblich größere Länge, wobei das Massestück 13 über die Länge der Leitungsverengung 11 hinweg mit der Leitungswand 1˝ im Wärmekontakt steht, so daß ein effektiver Temperaturaustausch zwischen dem Massestück 13 und dem Medium in der Leitung 1 erreicht wird. Um auch eine Korrelation der Temperatur des Massestücks 13 mit der des Heizelements 4 herzustellen, kann - wie im Ausführungsbeispiel - das Massestück 13 über eine mit Abstand neben der Leitungswand angeordnete Wärmeleitungsbrücke 14 mit dem Heizelement 4, insbesondere mit dessen Heizplatte 6, verbunden sein. Durch passende Wahl des Werkstoffs und des Querschnitts dieser Wärmeleitungsbrücke 14 kann eine Vorheizung des Massestücks 13 durch das Heizelement 4 und eine entsprechende Vorwärmung des der ersten Leitungsverengung 3 zuströmenden Mediums erhalten werden.

## Patentansprüche

1. Flußwächter für ein in einer Leitung (1) fließendes Medium, mit einer im Leitungszug liegenden Leitungsverengung (3), mit einem Heizelement (4) und mit einer Temperatursonde (5), wobei das Heizelement (4) und die Temperatursonde (5) sich an der Leitungsverengung (3) mit einander zugewandten Wärmeübergangsflächen (4′, 5′) im wesentlichen quer zur Fließrichtung des Mediums gegenüber liegen, dadurch gekennzeichnet, daß das Heizelement (4) und die Temperatursonde (5) mit ihren außerhalb der Leitung (1) liegenden Wärmeübergangsflächen (4′, 5′) im Wärmekontakt mit der Außenseite von Teilen (1′) der Leitungswand stehen, die zwischen sich die Leitungsverengung (3) bilden und ausreichend dünnwandig sind, so daß die Wärmeleitung zwischen den Wärmeübergangsflächen (4′, 5′) und dem Medium quer durch die Leitungswand besser ist als die Wärmeleitung in der Leitungswand entlang dem Umfang der Leitungsverengung (3).

2. Flußwächter nach Anspruch 1, dadurch gekennzeichnet, daß das Heizelement (4) eine Heizplatte (6) besitzt, die mit der Plattenebene im wesentlichen quer zur Fließrichtung des Mediums ausgerichtet ist und mit einem Teil ihres Randes die Wärmeübergangsfläche (4′) bildet.

3. Flußwächter nach Anspruch 1 oder 2, dadurch gekennzeichnet, daß die Wärmeübergangsfläche (4′) des Heizelements (4) die Leitungswand über einen Teil des Umfangs der Leitungsverengung (3) umschließt.

4. Flußwächter nach einem der Ansprüche 1 bis 3, dadurch gekennzeichnet, daß die Leitung (1) von einem Schlauch oder Rohr aus flexiblem Werkstoff und die Leitungsverengung (3) durch Zusammendrücken der Schlauch- oder Rohrwand zwischen den Wärmeübergangsflächen (4′, 5′) der Heizplatte (4) und der Temperatursonde (5) gebildet ist.

5. Flußwächter nach einem der Ansprüche 1 bis 4, dadurch gekennzeichnet, daß mindestens ein Teil der Wärmeübergangsfläche (4′) des Heizelements (4) von einer zur Flußrichtung des Mediums parallelen Nut gebildet ist, in der die Leitung (1) liegt, und daß die der Nut gegenüber liegende Wärmeübergangsfläche (5′) der Temperatursonde (5) quer zur Fließrichtung des Mediums schmaler als die Nutbreite (10) zwischen den Nuträndern ist.

6. Flußwächter nach Anspruch 5, dadurch gekennzeichnet, daß der Querschnitt der Nut konkav ausgerundet ist.

7. Flußwächter nach Anspruch 4 oder einem darauf bezogenen anderen Anspruch, dadurch gekennzeichnet, daß das Heizelement (4) und die Temperatursonde (5) an zwei Backen (7) einer Klammer angeordnet sind, die über die Leitung (1) gegeneinander verspannt sind.

8. Flußwächter nach einem der Ansprüche 1 bis 7, dadurch gekennzeichnet, daß die Leitung (1) in Fließrichtung vor der Leitungsverengung (3) eine zweite Leitungsverengung (11) aufweist und eine zweite Temperatursonde (12) vorgesehen ist, deren Wärmeübergangsfläche (12′) in wärmeleitender Verbindung mit der Leitungswand (1˝) an der zweiten Leitungsverengung (11) steht, und daß zur Überwachung des Mediumflusses die Differenz der Signale von beiden Temperatursonden (5, 12) gebildet wird.

9. Flußwächter nach Anspruch 8, dadurch gekennzeichnet, daß die beiden Leitungsverengungen (3, 11) im wesentlichen gleiche Querschnittsgröße besitzen.

10. Flußwächter nach Anspruch 9 oder 10, dadurch gekennzeichnet, daß an der zweiten Leitungsverengung (11) zwischen der Außenfläche der Leitungswand (1˝) und der Wärmeübergangsfläche (12′) der Temperatursonde (12) ein mit beiden im Wärmekontakt stehendes, gut wärmeleitendes Massestück (13), vorzugsweise aus Metall, angeordnet ist.

11. Flußwächter nach Anspruch 10, dadurch gekennzeichnet,daß sich die zweite Leitungsverengung (11) in Fließrichtung des Mediums über eine im Vergleich zur ersten Leitungsverengung (3) größere Länge erstreckt und das Massestück (13) über die Länge der zweiten Leitungsverengung (11) hinweg mit der Leitungswand (1˝) im Wärmekontakt steht.

12. Flußwächter nach Anspruch 10 oder 11, dadurch gekennzeichnet,daß das Massestück (13) unabhängig vom Heizelement (4) selbständig beheizbar ist.

13. Flußwächter nach Anspruch 10 oder 11, dadurch gekennzeichnet, daß das Massestück (13) über eine neben der Leitungswand verlaufende Wärmeleitungsbrücke (14) mit dem Heizelement (4), vorzugsweise mit dessen Heizplatte (6), verbunden ist.

## Revendications

1. Dispositif de surveillance d'un courant pour un fluide circulant dans une conduite (1), comprenant un étranglement (3) situé dans le trajet de la conduite, un corps de chauffe (4) et une sonde de température (5), le corps de chauffe (4) et la sonde de température (5) étant disposés en face l'un de l'autre, sensiblement transversalement par rapport à la direction d'écoulement du fluide, dans la zone d'étranglement (3) de la conduite, avec des surfaces de transmission de chaleur (4′, 5′) tournées l'une vers l'autre, **caractérisé par le fait** que les surfaces de transmission de chaleur (4′, 5′) du corps de chauffe (4) et de la sonde de température (5), situées à l'extérieur de la conduite (1), sont en contact thermique avec la face extérieure d'éléments (1′) de la paroi de la conduite qui forment entre eux l'étranglement (3) et dont la paroi est assez mince, de telle sorte que la conduction de la chaleur entre les surfaces de transmission de chaleur (4′, 5′) et le fluide, transversalement à la paroi de la conduite, est meilleure que la conduction de la chaleur dans la paroi de la conduite, le long de la circonférence de l'étranglement (3).

2. Dispositif de surveillance d'un courant selon la revendication 1, caractérisé par le fait que le corps de chauffe (4) comprend une plaque chauffante (6) dont le plan est orienté sensiblement transversalement à la direction d'écoulement du fluide et qui forme avec une partie de son bord, la surface de transmission de chaleur (4′).

3. Dispositif de surveillance d'un courant selon l'une des revendications 1 ou 2, caractérisé par le fait que la surface de transmission de chaleur (4′) du corps de chauffe (4) entoure la paroi de la conduite sur une partie de la circonférence de l'étranglement (3).

4. Dispositif de surveillance d'un courant selon l'une des revendications 1 à 3, caractérisé par le fait que la conduite (1) est constituée par un tuyau souple ou par un tube en matériau souple, et que l'étranglement (3) de la conduite est obtenu par la compression de la paroi du tuyau ou du tube entre les surfaces de transmission de chaleur (4′, 5′) de la plaque chauffante (4) et de la sonde de température (5).

5. Dispositif de surveillance d'un courant selon l'une des revendications 1 à 4, caractérisé par le fait qu'au moins une partie de la surface de transmission de chaleur (4′) du corps de chauffe (4) est constituée par une gorge orientée parallèlement à la direction d'écoulement du fluide et abritant la conduite (1), et que la surface de transmission de chaleur (5′) de la sonde de température (5) située en face de la gorge, présente transversalement à la direction d'écoulement du fluide une largeur inférieure à la largeur (10) de la gorge entre les bords de celle-ci.

6. Dispositif de surveillance d'un courant selon la revendication 5, caractérisé par le fait que la section transversale de la gorge présente un arrondi concave.

7. Dispositif de surveillance d'un courant selon la revendication 4 ou selon une autre revendication se référant à celle-ci, caractérisé par le fait que le corps de chauffe (4) et la sonde de température (5) sont disposés sur deux mâchoires (7) d'un serre-joint qui sont bloquées l'une contre l'autre sur la conduite (1).

8. Dispositif de surveillance d'un courant selon l'une des revendications 1 à 7, caractérisé par le fait que la conduite (1) présente, dans la direction d'écoulement, en amont de l'étranglement (3), un second étranglement (11), que le dispositif comprend une seconde sonde de température (12) dont la surface de transmission de chaleur (12′) est en contact thermoconducteur avec la paroi de conduite (1˝) sur le second étranglement (11), et que la différence des signaux des deux sondes de température (5, 12) est formée pour la surveillance du courant de fluide.

9. Dispositif de surveillance d'un courant selon la revendication 8, caractérisé par le fait que les sections transversales des deux étranglements (3, 11) présentent sensiblement la même grandeur.

10. Dispositif de surveillance d'un courant selon l'une des revendications 9 ou 10, caractérisé par le fait que sur le second étranglement (11) est disposé, entre la surface extérieure de la paroi de conduite (1˝) et la surface de transmission de chaleur (12′) de la sonde de température (12), un élément de masse (13), de préférence métallique, en contact thermique avec celles-ci et assurant une bonne conduction de chaleur.

11. Dispositif de surveillance d'un courant selon la revendication 10, caractérisé par le fait que le second étranglement (11) s'étend, dans la direction d'écoulement du fluide, sur une longueur plus grande par rapport au premier étranglement (3), et que l'élément de masse (13) est en contact thermique, au-delà de la longueur du second étranglement (11), avec la paroi de conduite (1˝).

12. Dispositif de surveillance d'un courant selon l'une des revendications 10 ou 11, caractérisé par le fait que l'élément de masse (13) peut être chauffé de manière autonome et indépendamment du corps de chauffe (4).

13. Dispositif selon l'une des revendications 10 ou 11, caractérisé par le fait que l'élément de masse (13) est relié au corps de chauffe (4), de préférence à la plaque chauffante (6) de celui-ci, par l'intermédiaire d'un pont thermoconducteur (14) qui s'étend à côté de la paroi de la conduite.

## Claims

1. A flow monitor for a medium flowing in a conduit (1), comprising a conduit constriction (3) in the run of the conduit, a heating element (4) and a temperature probe (5), wherein the heating element (4) and the temperature probe (5) are disposed at the conduit constriction (3) in opposite relationship with mutually facing heat transfer surfaces (4′, 5′) substantially transversely to the direction of flow of the medium, characterised in that the heating element (4) and the temperature probe (5) are in thermal contact, with their heat transfer surfaces (4′, 5′) disposed outside the conduit (1), with the outside of parts (1′) of the conduit wall which form between them the conduit constriction (3) and which are sufficiently thin-walled that the conduction of heat between the heat transfer surfaces (4′, 5′) and the medium transversely through the conduit wall is better than the conduction of heat in the conduit wall along the periphery of the conduit constriction (3).

2. A flow monitor according to claim 1 characterised in that the heating element (4) has a heating plate (6) which is oriented with the plane of the plate substantially transversely to the direction of flow of the medium and which with a part of its edge forms the heat transfer surface (4′).

3. A flow monitor according to claim 1 or claim 2 characterised in that the heat transfer surface (4′) of the heating element (4) embraces the conduit wall over a part of the periphery of the conduit constriction (3).

4. A flow monitor according to one of claims 1 to 3 characterised in that the conduit (1) is formed by a hose or tube of flexible material and the conduit constriction (3) is formed by compression of the hose or tube wall between the heat transfer surfaces (4′, 5′) of the heating plate (4) and the temperature probe (5).

5. A flow monitor according to one of claims 1 to 4 characterised in that at least a part of the heat transfer surface (4′) of the heating element (4) is formed by a groove which is parallel to the direction of flow of the medium and in which the conduit (1) is disposed and that the heat transfer surface (5′) of the temperature probe (5), which is opposite to the groove, is narrower transversely to the direction of flow of the medium than the groove width (10) between the groove edges.

6. A flow monitor according to claim 5 characterised in that the cross-section of the groove is of a concavely rounded configuration.

7. A flow monitor according to claim 4 or another claim appendant thereto characterised in that the heating element (4) and the temperature probe (5) are arranged on two jaws (7) of a clamp means, which jaws are braced towards each other over the conduit (1).

8. A flow monitor according to one of claims 1 to 7 characterised in that the conduit (1) has a second conduit constriction (11) upstream of the conduit constriction (3) in the direction of flow, and that there is provided a second temperature probe (12) whose heat transfer surface (12′) is in heat-conducting communication with the conduit wall (1˝) at the second conduit constriction (11), and that the difference between the signals of the two temperature probes (5, 12) is formed for monitoring the flow of medium.

9. A flow monitor according to claim 8 characterised in that the two conduit constrictions (3, 11) are of substantially the same cross-sectional size.

10. A flow monitor according to claim 9 or claim 10 characterised in that disposed at the second conduit constriction (11) between the outside surface of the conduit wall (1˝) and the heat transfer surface (12′) of the temperature probe (12) is a mass portion (13) which is in thermal contact with both and which is a good conductor of heat, preferably comprising metal.

11. A flow monitor according to claim 10 characterised in that the second conduit constriction (11) extends in the direction of flow of the medium over a greater length than the first conduit constriction (3) and the mass portion (13) is in thermal contact with the conduit wall (1˝) over the length of the second conduit constriction (11).

12. A flow monitor according to claim 10 or claim 11 characterised in that the mass portion (13) is heatable separately independently of the heating element (4).

13. A flow monitor according to claim 10 or claim 11 characterised in that the mass portion (13) is connected to the heating element (4), preferably to the heating plate (6) thereof, by way of a heat conduction bridge (14) which extends beside the conduit wall.
